# DEMANDE DE BREVET EUROPEEN

(11) **EP 3 736 175 A1**
(43) Date de publication de la demande: **11.11.2020**
(21) Numéro de dépôt: 20172659.3
(22) Date de dépôt: 04.05.2020
(51) Int. Cl.: B60R 13/02, B60R 13/08, D21H 27/10

(54) **ÉLÉMENT DE TOIT ÉTANCHE EN CARTON POUR RIGIDIFIER LE TOIT D'UN VÉHICULE**

(30) Priorité: 10.05.2019 FR 1904868
(71) Demandeur: ADHEX TECHNOLOGIES, 21300 Chenôve (FR)
(72) Inventeur: PAUTET, Christophe, 21600 FENAY-HAMEAU DE DOMOIS (FR); JACSON, Vincent, 21600 LONGVIC (FR); DURAND, Hervé, 21000 DIJON (FR)
(74) Mandataire: Gevers & Orès

(57) **Abrégé**

- L'élément de toit (1), en particulier un panneau intérieur de plafond pour un
- L'élément de toit (1), en particulier un panneau intérieur de plafond pour un toit de véhicule automobile, comporte une pièce principale (4) en carton ondulé (5A) à double cannelure ou à simple cannelure, ainsi qu'au moins une couche de protection (6, 7) couvrant au moins une face externe (4A, 4B) de ladite pièce principale (4) en carton ondulé (5A, 5B), ladite couche de protection (6, 7) présentant un indice Cobb 1800 inférieur à 10 g/m² de manière à rendre étanche ledit élément de toit (1) de sorte qu'il conserve sa rigidité lorsqu'il est en contact avec de l'eau et/ou de la vapeur d'eau.

## Description

### DOMAINE TECHNIQUE

La présente invention concerne un élément de toit et en particulier un panneau intérieur de plafond pour un toit de véhicule destiné à améliorer la rigidité dudit toit, ledit élément de toit étant en carton et étanche.

### ÉTAT DE LA TECHNIQUE

Il est bien connu que, dans le domaine de l'automobile, les constructeurs cherchent à diminuer le poids total de leurs véhicules afin d'en réduire la consommation énergétique et d'en abaisser le coût de revient. Ces efforts d'allégement portent en priorité sur les pièces métalliques de carrosserie car elles contribuent significativement au poids total des véhicules.

En particulier, ces efforts d'allégement portent sur le pavillon de toit des véhicules dans la mesure où sa surface est grande et où il ne constitue pas une pièce structurante ou de sécurité en cas de choc frontal ou latéral. Ainsi, la réduction permanente de l'épaisseur de la tôle métallique du pavillon de toit a conduit à fabriquer des pavillons de toit de moins en moins rigides, extrêmement souples et déformables. Les pavillons de toit présentent désormais une déformation systématique et visible à l'œil nu, cette déformation étant accentuée par la brillance et le glacis surfacique de la peinture appliquée sur l'extérieur des pavillons.

Par ailleurs, la réduction de l'épaisseur des pavillons de toit métalliques a également amplifié les phénomènes de résonances vibratoires du pavillon, engendrés pour l'essentiel par la transmission de vibrations dues au roulage et au groupe moteur du véhicule.

Afin de remédier à ces inconvénients, on a déjà imaginé des dispositifs dits raidisseurs de toit permettant de limiter la déformation des pavillons de toit et de réduire les vibrations.

On connaît notamment des éléments raidisseurs de toit, décrits dans les demandes de brevet FR JP10071646, DE 19702581, JP8332904 et EP 1 298 034.

Ces éléments de toit présentent toutefois l'inconvénient d'être onéreux à fabriquer et/ou d'induire un temps de montage trop long.

Afin de remédier à ces inconvénients, on a imaginé des éléments de toit à base de carton ondulé. C'est le cas notamment des demandes de brevet français FR 3 011 519 et FR 3 012 105 déposées par la demanderesse.

La demande de brevet FR 3 011 519 décrit un élément de toit, en particulier un panneau intérieur de plafond pour un toit de véhicule, destiné à améliorer la rigidité dudit toit. Cet élément de toit comporte une pièce en carton ondulé et au moins une pièce amortissante apte à absorber les vibrations, ladite pièce amortissante étant solidaire de la pièce en carton ondulé. Cette dernière est obtenue dans du carton ondulé à double cannelure dans lequel est formé au moins un creux, ladite pièce amortissante s'étendant dans ledit creux. La pièce en carton ondulé comporte également une pluralité de bandes d'adhésif sensible à la pression, déposées sur la face supérieure de ladite pièce en carton ondulé et sur la paroi de fond du creux recevant la pièce amortissante.

En outre, la demande de brevet FR 3 012 105 décrit un panneau raidisseur (ou élément de toit) pour un panneau galbé en tôle. Ledit panneau raidisseur est réalisé dans du carton ondulé à double cannelure et comprend une série de découpes parallèles traversant partiellement l'épaisseur du panneau raidisseur en carton depuis la face supérieure dudit panneau raidisseur et une série de bandes adhésives recouvrant respectivement lesdites découpes parallèles. Ces découpes parallèles permettent de conférer au panneau raidisseur une souplesse telle que ce dernier peut, lors de son application contre le panneau en tôle, s'adapter à la surface galbée de celui-ci sans créer de déformation.

Ce type d'élément de toit en carton ondulé présente de nombreux avantages.

Toutefois, un tel élément de toit en carton ondulé peut parfois perdre, au moins en partie, certaines de ses propriétés et notamment sa rigidité lorsque ledit élément de toit est en contact avec de l'eau et/ou de la vapeur d'eau.

### EXPOSÉ DE L'INVENTION

La présente invention a pour objet de remédier à cet inconvénient. Elle concerne un élément de toit, en particulier un panneau intérieur de plafond pour un toit de véhicule, comportant une pièce principale en carton ondulé.

Selon l'invention, ledit élément de toit comporte, de plus, au moins une couche de protection couvrant au moins une face externe de ladite pièce principale en carton ondulé, ladite couche de protection présentant un indice Cobb 1800 inférieur à 10 g/m².

On sait que la valeur de l'indice Cobb d'un matériau est la masse d'eau (exprimée en grammes) absorbée par ce matériau pendant une durée donnée, par mètre carré de matériau, selon la norme ISO 535. Pour l'indice Cobb 1800 considéré dans le cadre de la présente invention, ladite durée donnée est de 1800 secondes (c'est-à-dire de 30 minutes).

Ainsi, grâce à l'invention, on obtient un élément de toit dont la pièce principale en carton ondulé est rendue étanche par une ou plusieurs couches de protection présentant un indice Cobb 1800 très faible (inférieur à 10 g/m²), c'est-à-dire par une ou plusieurs couches de protection ne laissant pas pénétrer l'eau, donc particulièrement étanches.

Par conséquent, l'élément de toit, tel que décrit ci-dessus, notamment lorsqu'il est utilisé comme panneau intérieur de plafond monté dans un toit d'un véhicule, conserve toutes ses propriétés et notamment sa rigidité en particulier lorsque ledit élément de toit est en contact avec de l'eau et/ou de la vapeur d'eau.

Avantageusement, l'élément de toit comporte au moins une couche de protection présentant un indice Cobb 1800 inférieur à 10 g/m² et couvrant au moins une partie d'une face périphérique de ladite pièce principale en carton ondulé, et de préférence toute ladite face périphérique.

Dans un mode de réalisation préféré, ledit élément de toit comporte une enveloppe de protection, complètement fermée, formée de couches de protection présentant, chacune, un indice Cobb 1800 inférieur à 10 g/m², ladite enveloppe de protection enveloppant complètement ladite pièce principale en carton ondulé. Avantageusement, dans ce mode de réalisation préféré, ledit élément de toit comporte une première couche de protection couvrant entièrement une face externe supérieure de la pièce principale et une seconde couche de protection couvrant entièrement une face externe inférieure de la pièce principale, ladite première couche de protection présentant un bord périphérique dépassant l'extrémité périphérique de la pièce principale, ladite seconde couche de protection présentant également un bord périphérique dépassant l'extrémité périphérique de la pièce principale, les bords périphériques desdites première et seconde couches de protection étant solidaires l'un à l'autre de sorte que lesdites première et seconde couches de protection ainsi solidarisées forment ladite enveloppe de protection. Ainsi, l'enveloppe de protection peut être réalisée de façon simple et rapide.

Dans le cadre de la présente invention, ladite ou lesdites couches de protection peuvent être réalisées en différents matériaux. De façon avantageuse, ladite ou lesdites couches de protection correspondent à un film plastique adhésif ou thermocollant, d'épaisseur comprise entre 15 µm et 100 µm.

En outre, dans le cadre de la présente invention, la pièce principale en carton ondulé peut comporter un carton simple cannelure ou un carton double cannelure.

Dans un mode de réalisation particulier, au moins un évidement est pratiqué dans la pièce principale et ladite pièce principale est pourvue d'au moins une pièce amortissante agencée dans ledit évidement de sorte qu'une face externe de ladite pièce amortissante affleure une face externe de ladite pièce principale. De plus, avantageusement, ledit élément de toit comporte au moins une bande d'adhésif à double face adhérente (comprenant de l'adhésif sensible à la pression), ladite bande d'adhésif étant déposée en contact, d'une part, d'un fond dudit évidement, et d'autre part, d'une face de ladite pièce amortissante en regard dudit fond.

En outre, de façon avantageuse, la pièce principale en carton ondulé comporte des découpes traversant partiellement l'épaisseur de la pièce principale. Ces découpes confèrent une souplesse à la pièce principale. La pièce principale en carton ondulé peut comporter des découpes formées depuis la face externe supérieure de ladite pièce principale et/ou des découpes formées depuis la face externe inférieure de ladite pièce principale. De plus, lorsque la pièce principale est pourvue d'au moins une pièce amortissante, lesdites découpes peuvent traverser au moins partiellement l'épaisseur de cette pièce amortissante.

Par ailleurs, dans un mode de réalisation particulier, la pièce principale en carton ondulé comporte au moins une ligne de rainure formée depuis au moins l'une des faces extérieures de ladite pièce principale en carton ondulé. Dans une réalisation particulière, ladite pièce principale en carton ondulé comporte au moins une première et une seconde lignes de rainure, la première ligne de rainure étant formée depuis une face externe supérieure de ladite pièce principale et la seconde ligne de rainure étant formée depuis une face externe inférieure de ladite pièce principale. Ces lignes de rainure permettent notamment d'adapter la pièce principale au galbe du pavillon de toit du véhicule.

En outre, dans un mode de réalisation particulier, l'élément de toit comporte une pluralité de bandes d'adhésif à double face adhérente (comprenant de l'adhésif sensible à la pression), lesdites bandes d'adhésif étant déposées sur une face externe supérieure dudit élément de toit. Ces bandes d'adhésif permettent de fixer l'élément de toit, par exemple à l'intérieur du pavillon de toit du véhicule. Dans ce cas, de préférence, ledit élément de toit comporte également un film protecteur amovible, recouvrant l'ensemble desdites bandes d'adhésif. Ce film protecteur permet, notamment, de faciliter la pose de l'élément de toit.

### BRÈVE DESCRIPTION DES FIGURES

D'autres avantages et caractéristiques ressortiront mieux de la description qui va suivre de plusieurs modes de réalisation, donnés à titre d'exemples non limitatifs, de l'élément de toit conforme à l'invention, en se référant notamment aux figures annexées. Sur ces figures, des références identiques désignent des éléments semblables.
La figure 1 est une vue partielle, en perspective, d'un pavillon de toit d'un véhicule automobile pourvu d'un mode de réalisation particulier d'un élément de toit conforme à l'invention.
La figure 2 est une vue schématique, en plan, d'un mode de réalisation particulier d'un élément de toit.
La figure 3 est une vue schématique, en perspective, du mode de réalisation particulier de l'élément de toit de la figure 2.
La figure 4 est une vue partielle schématique, en coupe transversale, d'un premier mode de réalisation de l'élément de toit représenté sur les figures 2 et 3.
La figure 5 est une vue partielle schématique, en coupe transversale, d'un mode de réalisation particulier de l'élément de toit, permettant de montrer la solidarisation de bords périphériques de couches de protection pour former une enveloppe de protection.
La figure 6 est une vue partielle schématique, en coupe transversale, d'un deuxième mode de réalisation de l'élément de toit.
La figure 7 est une vue partielle schématique, en coupe transversale, d'un troisième mode de réalisation de l'élément de toit.
La figure 8 est une vue partielle schématique, en coupe transversale, d'un quatrième mode de réalisation de l'élément de toit.
La figure 9 est une vue partielle schématique, en coupe transversale, d'un cinquième mode de réalisation de l'élément de toit.
La figure 10 est une vue partielle schématique, en coupe transversale, d'un sixième mode de réalisation de l'élément de toit.

### DESCRIPTION DÉTAILLÉE

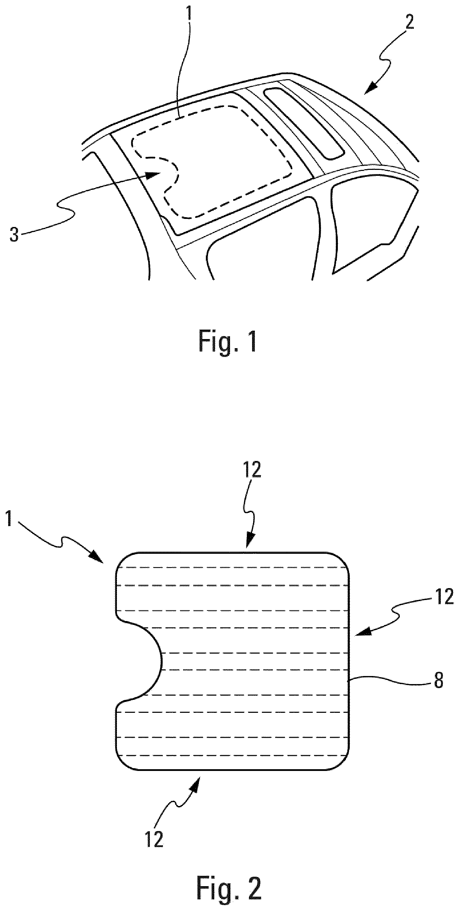

On décrit ci-après un élément de toit 1 d'un véhicule automobile 2 (figure 1), et plus particulièrement un panneau intérieur de plafond du véhicule automobile 2. Toutefois, il est bien évident que ledit élément de toit 1 pourra être utilisé pour tout type de véhicule sans pour autant sortir du cadre de l'invention.

La figure 1 est une vue en perspective montrant partiellement la caisse du véhicule automobile 2. Sous le pavillon 3 de toit de cette caisse est agencé l'élément de toit 1, comme représenté en tirets sur ladite figure 1.

Cet l'élément de toit 1 destiné notamment à améliorer la rigidité du pavillon 3 de toit du véhicule automobile 2 présente, dans l'exemple représenté, une forme générale (en plan) sensiblement rectangulaire. Bien entendu dans le cadre de la présente invention, ledit élément de toit 1 peut présenter toute autre forme possible, par exemple une forme carrée ou une forme quelconque.

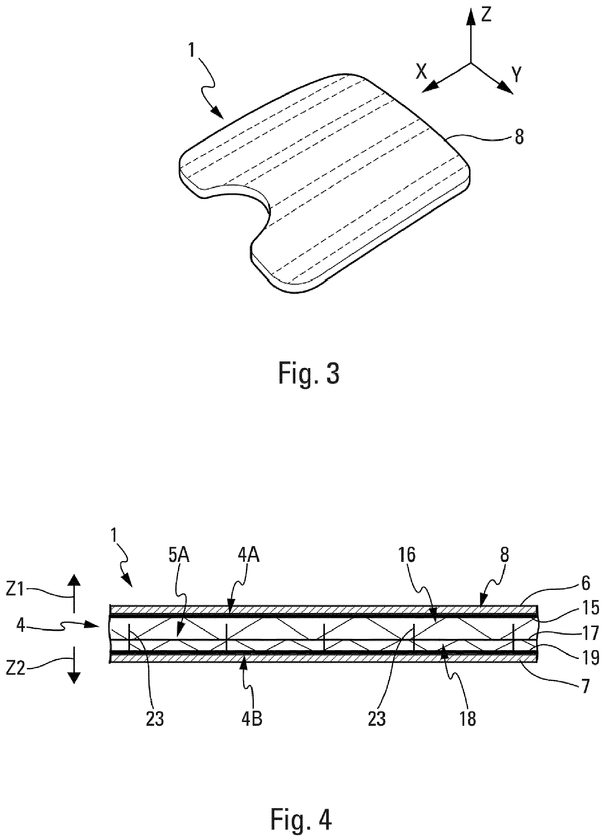

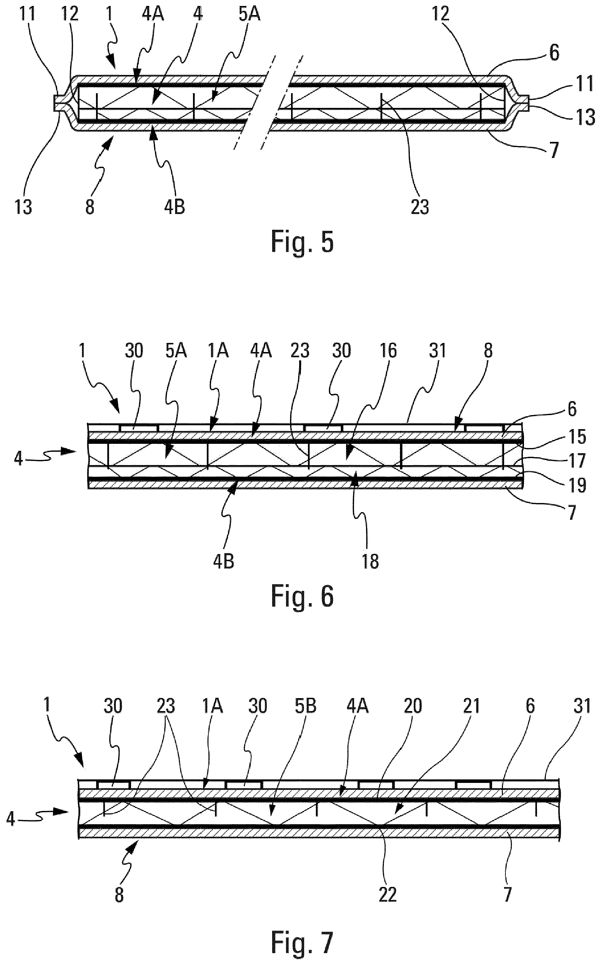

Ledit élément de toit 1 montré schématiquement, respectivement en vue en plan et en vue en perspective sur les figures 2 et 3, comporte une pièce 4 dite principale en carton ondulé 5A, 5B, comme représenté en particulier sur les figures 4 et 7.

Une telle pièce principale 4 en carton ondulé permet, notamment, de rigidifier une structure telle que le pavillon d'un véhicule automobile, tout en présentant un poids faible.

Pour faciliter la description suivante, on a représenté sur la figure 3 un référentiel R d'axes X, Y et Z, lié à l'élément de toit 1. Plus particulièrement :
- l'axe X est défini sensiblement vers l'avant du véhicule automobile 2 selon un axe longitudinal de ce véhicule automobile 2, lorsque l'élément de toit 1 est monté sur le véhicule automobile 2 ;
- l'axe Y forme avec l'axe X un plan sensiblement horizontal dans la position montée ; et
- l'axe Z est un axe vertical, orthogonal au plan horizontal X Y.

Dans le cadre de la présente invention, les adjectifs « supérieur », « inférieur », « haut » et « bas » sont définis par rapport à l'axe Z, à savoir « supérieur » et « haut » dans le sens illustré par une flèche Z1 (figure 4), c'est-à-dire vers le haut du véhicule automobile 2 en position montée, et « inférieur » et « bas » dans le sens d'une flèche Z2 (figure 4), opposé à celui de la flèche Z1. De plus, l'adjectif « externe » est défini par rapport à l'extérieur de la pièce principale 4, que ce soit dans le sens de la flèche Z1 ou dans le sens de la flèche Z2.

En outre, l'adjectif « longitudinal » s'applique à une pièce ou partie de l'élément de toit 1 orientée selon une direction parallèle à l'axe X, et l'adjectif « transversal » s'applique à une pièce ou partie de l'élément de toit 1 orientée selon une direction parallèle à l'axe Y.

Quant à l'adjectif « périphérique », il définit le pourtour d'une pièce ou partie de l'élément de toit 1 dans le plan XY.

Selon l'invention, comme représenté par exemple sur la figure 4, l'élément de toit 1 comporte au moins une couche de protection 6, 7 couvrant au moins une face externe 4A, 4B de ladite pièce principale 4 en carton ondulé.

De plus, selon l'invention, ladite couche de protection 6, 7 présente un indice Cobb 1800 inférieur à 10 g/m². Selon la norme ISO 535, la valeur de l'indice Cobb 1800 d'un matériau représente la masse d'eau (exprimée en grammes) qui est absorbée par ce matériau pendant une durée donnée de 1800 secondes (c'est-à-dire de 30 minutes), et ceci pour un mètre carré de matériau.

Ainsi, comme précisé ci-dessous, la pièce principale 4 (en carton ondulé) de l'élément de toit 1 est rendue étanche par une ou plusieurs couches de protection 6, 7 présentant un indice Cobb 1800 très faible (inférieur à 10 g/m²), c'est-à-dire par une ou plusieurs couches de protection 6, 7 ne laissant pas pénétrer l'eau, qui sont donc particulièrement étanches.

Dans un mode de réalisation préféré, comme représenté notamment sur les figures 4 et 5, l'élément de toit 1 comporte une enveloppe de protection 8. Cette enveloppe de protection 8 est complètement fermée, et elle est formée de deux couches de protection 6 et 7 présentant, chacune, un indice Cobb 1800 inférieur à 10 g/m². L'enveloppe de protection 8 enveloppe complètement la pièce principale 4 en carton ondulé.

Dans ce mode de réalisation préféré, l'élément de toit 1 comporte une première couche de protection 6 couvrant entièrement la face (externe) supérieure 4A de la pièce principale 4 et une seconde couche de protection 7 couvrant entièrement la face (externe) inférieure 4B de la pièce principale 4. Comme représenté sur la figure 5, la couche de protection 6 présente un bord périphérique 11 dépassant l'extrémité périphérique 12 de la pièce principale 4 sur tout le pourtour ou périphérie de cette dernière dans le plan XY. De même, la couche de protection 7 présente également un bord périphérique 13 dépassant ladite extrémité périphérique 12 de la pièce principale 4 sur tout le pourtour ou périphérie de cette dernière dans le plan XY. De plus, comme représenté sur la figure 5, ces bords périphériques 11 et 13 des couches de protection 6 et 7 sont solidarisés l'un à l'autre de sorte que l'ensemble formé de ces couches de protection 6 et 7 (solidarisées aux bords périphériques 11 et 13) constitue ladite enveloppe de protection 8.

Ainsi, l'enveloppe de protection 8 peut être réalisée de façon simple et rapide, à partir seulement de deux couches de protection 6 et 7 dont les bords périphériques 11 et 13 sont rendus solidaires l'un de l'autre. Cette solidarisation peut, notamment, être réalisée par thermocollage ou par mise en contact de deux faces adhésives.

D'autres variantes de recouvrement de la face périphérique 12 de ladite pièce principale 4 en carton ondulé par une couche de protection sont bien entendu envisageables, par exemple en prévoyant une couche de protection spécifique ou en recouvrant cette face périphérique par le bord périphérique de l'une seule des couches de protection 6 et 7.

La pièce principale 4 de l'élément de toit 1 est donc entièrement recouverte (à la fois sur la face supérieure 4A, sur la face inférieure 4B, et sur la face périphérique 12 (figure 2)) par des couches de protection présentant un indice Cobb 1800 inférieur à 10 g/m².

Par conséquent, grâce à cette enveloppe de protection 8, l'élément de toit 1 conserve toutes ses propriétés et notamment sa rigidité lorsqu'il est amené en contact avec de l'eau et/ou de la vapeur d'eau, en particulier en étant monté dans le toit d'un véhicule automobile 2 comme dans l'exemple de la figure 1.

Dans le cadre de la présente invention, les couches de protection 6 et 7 peuvent être réalisées en différents matériaux plastiques. Dans un mode de réalisation particulier, chacune des couches de protection de l'élément de toit 1 correspond à un film plastique, adhésif ou thermocollant, d'épaisseur comprise entre 15 µm et 100 µm.

L'élément de toit 1 comporte donc une pièce principale 4 en carton ondulé et une ou plusieurs couches de protection 6 et 7 étanches. Dans le cadre de la présente invention, la pièce principale 4 peut être réalisée de différentes manières et/ou peut comporter différents éléments spécifiques et/ou différentes caractéristiques spécifiques.

On décrit ci-après, à titre non limitatif, des modes de réalisation particuliers de la pièce principale 4 en carton ondulé, susceptibles d'être utilisés dans l'élément de toit 1 conforme à la présente invention.

Dans un premier mode de réalisation, représenté notamment sur les figures 4 et 6, la pièce principale 4 comporte un carton ondulé 5A à double cannelure. Ce carton ondulé 5A à double cannelure comprend successivement, du haut vers le bas (c'est-à-dire dans le sens de la flèche Z2 de la figure 4), une couverture supérieure 15, une cannelure supérieure 16, une couverture médiane 17, une cannelure inférieure 18 et une couverture inférieure 19.

Dans l'exemple des figures 4 et 6, le carton ondulé 5A à double cannelure est dit dissymétrique, la cannelure supérieure 16 étant plus grande que la cannelure inférieure 18.

De manière usuelle, le collage des différentes couches du carton ondulé 5A à double cannelure est réalisé à l'amidon. De préférence, le poids surfacique total moyen du carton ondulé est de 1090 g/m² selon la norme Q 03-031 pour une épaisseur moyenne de 7 mm mesurée selon la norme Q 03-030. A titre d'illustration non limitative, le carton ondulé 5A à double cannelure dissymétrique comprend la couverture supérieure 15 en Kraftliner de poids moyen compris entre 200 et 225 g/m², la cannelure supérieure 16 dite mi-chimique de poids moyen compris entre 140 et 160 g/m², la couverture médiane 17 en Kraftliner de poids moyen compris entre 175 et 200 g/m², la cannelure inférieure 18 mi-chimique de poids moyen compris entre 140 et 160 g/m² et la couverture inférieure 19 en Kraftliner de poids moyen compris entre 200 et 225 g/m².

Par ailleurs, dans un second mode de réalisation représenté sur la figure 7, la pièce principale 4 comporte du carton ondulé 5B à simple cannelure. Ce carton ondulé 5B à simple cannelure comporte, successivement du haut vers le bas, une couverture supérieure 20, une cannelure 21 et une couverture inférieure 22. A titre d'illustration, non limitative, ledit carton ondulé 5B à simple cannelure présente une épaisseur comprise entre 2 et 6 mm, un coefficient d'ondulation compris entre 1,35 et 1,70, 120 à 180 cannelures au mètre, et la somme des grammages de la couverture supérieure 20 et de la couverture inférieure 22 est comprise entre 200 et 635 g/m².

Par ailleurs, dans un mode de réalisation particulier, représenté sur les figures 4 à 8, la pièce principale 4 en carton ondulé 5A, 5B comporte des découpes 23 traversant partiellement l'épaisseur de ladite pièce principale 4. Comme précisé ci-dessous, la pièce principale 4 en carton ondulé 5A, 5B peut comporter des découpes 23 formées depuis la face (externe) supérieure 4A de ladite pièce principale 4 (figures 6 et 7) ou des découpes formées depuis la face (externe) inférieure 4B de ladite pièce principale 4 (figures 4, 5 et 8).

En variante (non représentée), il est également envisageable de prévoir une pièce principale comprenant, à la fois, des découpes formées depuis la face externe supérieure de ladite pièce principale et des découpes formées depuis la face externe inférieure de ladite pièce principale.

Ces découpes 23 permettent un pliage plus aisé de l'élément de toit 1 en vue d'une adaptation de forme lors de sa mise en place.

De préférence, les découpes 23 sont parallèles entre elles et elles s'étendent parallèlement aux cannelures (mises en évidence par des tirets sur les figures 2 et 3). Les découpes 23 étant formées dans une partie de l'épaisseur de la pièce principale 4, elles peuvent, dans le cas d'un carton ondulé 5A à double cannelure, être pratiquées dans une seule cannelure ou bien traverser complètement l'une des cannelures, la couverture médiane et partiellement l'autre cannelure (figures 4 à 6).

Ces découpes 23 confèrent à la pièce principale 4 et ainsi à l'élément de toit 1 une souplesse telle que l'élément de toit 1 peut, lors de son application contre le panneau de tôle du pavillon 3 du véhicule 2, s'adapter à la surface galbée de ce dernier sans créer de déformation.

Par ailleurs, dans un mode de réalisation particulier (non représenté), on réalise, sur les deux faces externes ou sur une face externe de la pièce principale, de préférence sur la face externe supérieure, deux séries de découpes, l'une de ces séries étant orientée dans le sens de la longueur de la pièce principale (c'est-à-dire selon l'axe X) et l'autre série étant orientée dans le sens de la largeur de la pièce principale (c'est-à-dire selon l'axe Y). Dans ce cas, la pièce principale (et ainsi l'élément de toit) est souple dans les deux sens et par conséquent, lors de sa pose, il épouse parfaitement la concavité du panneau en tôle du pavillon 3 dans le sens de sa longueur et de sa largeur, sans engendrer de déformation de la tôle, ni de détachement de l'élément de toit 1.

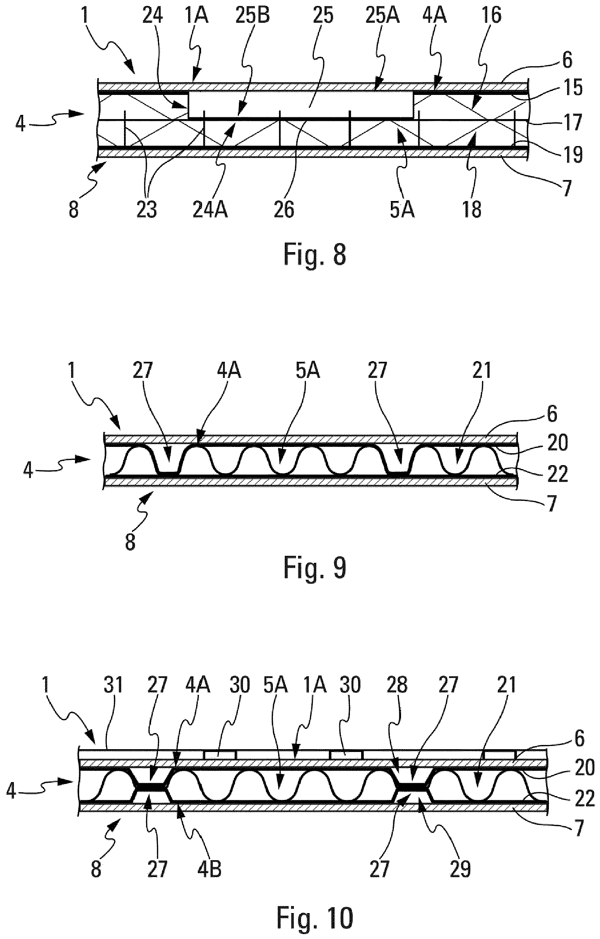

En outre, dans un mode de réalisation particulier, représenté sur la figure 8, un évidement (ou creux) 24 est pratiqué dans la pièce principale 4. De plus, ladite pièce principale 4 est pourvue d'au moins une pièce amortissante 25 agencée dans ledit évidement 24 de sorte qu'une face externe (supérieure) 25A de ladite pièce amortissante 25 affleure la face externe supérieure 4A de ladite pièce principale 4.

De préférence, la pièce amortissante 25 présente un grammage surfacique compris entre 6 et 15 kg/m² et est réalisée dans une plaque de masse lourde bitumeuse dite IFF selon l'acronyme « Insonorisant Fusible en Feuille », qui peut avantageusement comporter des charges minérales et/ou des charges magnétiques.

La pièce principale 4 peut comporter une ou plusieurs pièces amortissantes 25 de ce type.

De plus, l'élément de toit 1 comporte également une ou plusieurs bandes d'adhésif 26 à double face adhérente (comprenant de l'adhésif sensible à la pression). La ou les bandes d'adhésif 26 sont déposées en contact, d'une part, du fond 24A dudit évidement 24, et d'autre part, d'une face 25B de ladite pièce amortissante 25 en regard dudit fond 24A. Cette ou ces bandes d'adhésif 26 permettent de solidariser la pièce amortissante 25 de la pièce principale 4.

De préférence, l'évidement 24 est formé dans la pièce principale 4 par une découpe dans l'épaisseur de cette dernière et par un écrasement de la partie découpée. La découpe dans la ou les cannelures de la pièce principale 4 est réalisée par tout moyen de découpe approprié bien connu de l'homme du métier.

Dans l'exemple de la figure 8, l'évidement 24 est uniquement réalisé dans la cannelure supérieure 16 du carton ondulé 5A à double cannelure. Toutefois, en variante, l'évidement peut également être prévu, au moins en partie, dans la cannelure inférieure 18.

Ce mode de réalisation à pièce amortissante peut bien entendu également être appliqué à un élément de toit pourvu d'un carton ondulé 5B à simple cannelure.

On notera que les découpes 23 (si elles sont prévues dans la pièce principale 4) peuvent également traverser partiellement la pièce amortissante 25 comme représenté sur la figure 8, sans pour autant sortir du cadre de l'invention.

Par ailleurs, dans un mode de réalisation particulier, représenté sur les figures 9 et 10, la pièce principale 4 en carton ondulé comporte au moins une ligne dite de rainure 27, et de préférence une pluralité de lignes de rainure 27, qui sont formées depuis au moins l'une des faces externes 4A et 4B de ladite pièce principale 4

Ces lignes de rainure 27 ont pour but de permettre à l'élément de toit 1 de s'adapter à la surface galbée du pavillon 3 de toit du véhicule automobile 2 sans créer de déformation susceptible d'affecter le collage dudit élément de toit 1.

La pièce principale 4 en carton ondulé peut comprendre des lignes de rainure 27 longitudinales (c'est-à-dire selon l'axe X) et/ou des lignes de rainure 27 transversales (c'est-à-dire selon l'axe Y), afin de s'adapter le plus précisément au galbe du pavillon 3 de toit.

De préférence, les lignes de rainure 27 sont parallèles aux cannelures de la pièce principale 4 en carton ondulé et sont obtenues par un rainage au moyen d'un filet raineur, constitué d'une mince lame d'acier à fil arrondi, et d'une gouttière positionnée du côté opposé du filet raineur. De plus, chaque ligne de rainure 27 peut présenter une profondeur inférieure ou même une profondeur supérieure à l'épaisseur de la pièce principale 4.

Dans une réalisation particulière, représentée sur la figure 10, la pièce principale 4 en carton ondulé comporte deux séries 28 et 29 de lignes de rainure 27 opposées, à savoir une première série 28 de lignes de rainure 27 pratiquées depuis la face (externe) supérieure 4A de ladite pièce principale 4 et une seconde série 29 de lignes de rainure 27 pratiquées depuis la face (externe) inférieure 4B de ladite pièce principale 4. Chaque ligne de rainure 27 de la première série 28 est opposée à une ligne de rainure 27 de la seconde série 29.

Selon une variante de réalisation (non représentée), la pièce principale peut comporter des lignes de rainure dites supérieures pratiquées depuis la face (externe) supérieure de ladite pièce principale et des lignes de rainure dites inférieures pratiquées depuis la face (externe) inférieure de ladite pièce principale, les lignes de rainure supérieures et inférieures étant dans ce cas, non pas opposées, mais agencées en quinconce.

Par ailleurs, dans un mode de réalisation particulier (représenté sur les figures 6, 7 et 10), l'élément de toit 1 comporte une pluralité de bandes d'adhésif 30 à double face adhérente (comprenant de l'adhésif sensible à la pression). Lesdites bandes d'adhésif 30 sont déposées sur une face externe supérieure 1A dudit élément de toit 1. Ces bandes d'adhésif 30 permettent de fixer l'élément de toit 1, par exemple à l'intérieur du plafond du véhicule automobile 1 dans l'exemple de la figure 1.

Ladite face externe supérieure 1A correspond, de préférence, à la face externe supérieure de la couche de protection 6 supérieure. Toutefois dans un mode de réalisation particulier dépourvue de couche de protection 6 supérieure, la face externe supérieure peut correspondre à la face (externe) supérieure 4A de la pièce principale 4.

Dans un exemple de réalisation particulier, lesdites bandes d'adhésif 30 comportent une première couche d'adhésif sensible à la pression, une couche en mousse et une seconde couche d'adhésif sensible à la pression. A titre d'illustration, non limitative, la couche en mousse présente, de préférence, une épaisseur comprise entre 500 et 1300 µm et les couches d'adhésif sensible à la pression présentent une épaisseur comprise entre 50 et 100 µm. Lesdites couches d'adhésif sensible à la pression sont obtenues dans un adhésif acrylique avec une base de solvant auto-réticulant. De plus, la couche de mousse présente une densité comprise entre 40 kg/m³ et 160 kg/m³ et est obtenue dans de la mousse de polyéthylène à cellules fermées, réticulée physique.

De préférence, l'élément de toit 1 comporte de plus, comme représenté sur les figures 6, 7 et 10, un film protecteur 31 coiffant l'ensemble des bandes d'adhésif 30 déposées sur la face externe supérieure 1A de l'élément de toit 1. Ce film protecteur 31 qui est à retirer préalablement à la pose de l'élément de toit 1, correspond, par exemple, à une feuille de papier siliconée ou à tout autre film protecteur équivalent bien connu de l'homme du métier. On notera que l'élément de toit 1 comporte, de préférence, un seul film protecteur 31, ce qui facilite sa pose et réduit la pollution du lieu de montage.

Dans le mode de réalisation représenté sur les figures 4, 5, 8 et 9, l'élément de toit 1 ne comporte pas de bandes d'adhésif 30. Dans ce mode de réalisation, pour fixer l'élément de toit 1, par exemple sur un pavillon 3 de toit, l'utilisateur final peut déposer des bandes adhésives (à base de colle PU mono-composant commercialisé par la société SIKA sous la référence Sikaflex 250 MKV) directement sur la face supérieure externe 1A (figure 8) de l'élément de toit 1 avant de l'assembler à chaud sur le pavillon 3 du véhicule 2.

Grâce aux caractéristiques précitées, on obtient un élément de toit 1 particulièrement avantageux, à savoir notamment :
- de conception simple ;
- procurant une limitation efficace des vibrations, des bruits de tambourinement des gouttes de pluie et des déformations ;
- permettant un montage rapide et aisé en se conformant au galbe du toit du véhicule ; et
- complètement étanche de manière à conserver toute sa rigidité lorsqu'il est contact avec de l'eau ou de la vapeur d'eau.

Il est bien évident que les exemples présentés ci-dessus ne sont que des illustrations particulières, en aucun cas limitatives quant aux domaines d'application de la présente invention. De plus, des caractéristiques de certains de ces exemples différents peuvent être combinées entre elles si cela est approprié, sans sortir du cadre de la présente invention.

## Revendications

1. Elément de toit, en particulier panneau intérieur de plafond pour un toit de véhicule, ledit élément de toit (1) comportant une pièce principale (4) en carton ondulé (5A, 5B),
**caractérisé en ce qu'**il comporte au moins une couche de protection (6, 7) couvrant au moins une face externe (4A, 4B) de ladite pièce principale (4) en carton ondulé (5A, 5B), ladite couche de protection (6, 7) présentant un indice Cobb 1800 inférieur à 10 g/m².

2. Elément de toit selon la revendication 1,
**caractérisé en ce qu'**il comporte au moins une couche de protection (6, 7) présentant un indice Cobb 1800 inférieur à 10 g/m² et couvrant au moins une partie d'une face périphérique (12) de ladite pièce principale (4) en carton ondulé (5A, 5B).

3. Elément de toit selon l'une des revendications 1 et 2,
**caractérisé en ce qu'**il comporte une enveloppe de protection (8), complètement fermée, formée de couches de protection (6, 7) présentant, chacune, un indice Cobb 1800 inférieur à 10 g/m², ladite enveloppe de protection (8) enveloppant complètement ladite pièce principale (4) en carton ondulé (5A, 5B).

4. Elément de toit selon la revendication 3,
**caractérisé en ce qu'**il comporte une première couche de protection (6) couvrant entièrement une face externe (4A) supérieure de la pièce principale (4) et une seconde couche de protection (7) couvrant entièrement une face externe (4B) inférieure de la pièce principale (4), ladite première couche de protection (6) présentant un bord périphérique (11) dépassant l'extrémité périphérique (12) de la pièce principale (4), ladite seconde couche de protection (7) présentant également un bord périphérique (13) dépassant l'extrémité périphérique (12) de la pièce principale (4), les bords périphériques (11, 13) desdites première et seconde couches de protection (6, 7) étant solidaires l'un à l'autre de sorte que lesdites première et seconde couches de protection (6,7) ainsi solidarisées forment ladite enveloppe de protection (8).

5. Elément de toit selon l'une quelconque des revendications précédentes,
**caractérisé en ce que** ladite ou lesdites couches de protection (6, 7) correspondent à un film plastique adhésif ou thermocollant, d'épaisseur comprise entre 15 µm et 100 µm.

6. Elément de toit selon l'une quelconque des revendications 1 à 5,
**caractérisé en ce que** la pièce principale (4) en carton ondulé est pourvue d'un carton simple cannelure (5B).

7. Elément de toit selon l'une quelconque des revendications 1 à 5,
**caractérisé en ce que** la pièce principale (4) en carton ondulé est pourvue d'un carton double cannelure (5A).

8. Elément de toit selon l'une quelconque des revendications précédentes,
**caractérisé en ce qu'**au moins un évidement (24) est pratiqué dans la pièce principale (4) et **en ce que** ladite pièce principale (4) est pourvue d'au moins une pièce amortissante (25) agencée dans ledit évidement (24) de sorte qu'une face externe (25A) de ladite pièce amortissante (25) affleure une face externe (4A) de ladite pièce principale (4).

9. Elément de toit selon la revendication 8,
**caractérisé en ce qu'**il comporte au moins une bande d'adhésif (26) à double face adhérente, ladite bande d'adhésif (26) étant déposée en contact, d'une part, d'un fond (24A) dudit évidement (24), et d'autre part, d'une face (25B) de ladite pièce amortissante (25) en regard dudit fond (24A).

10. Elément de toit selon l'une quelconque des revendications précédentes,
**caractérisé en ce que** la pièce principale (4) en carton ondulé (5A, 5B) comporte des découpes (23) traversant partiellement l'épaisseur de la pièce principale (4), lesdites découpes (23) étant formées depuis au moins l'une des faces externes (4A, 4B) de ladite pièce principale (4) en carton ondulé (5A, 5B).

11. Elément de toit selon les revendications 8 et 10,
**caractérisé en ce que** lesdites découpes (23) traversent au moins partiellement l'épaisseur de la pièce amortissante (25).

12. Elément de toit selon l'une quelconque des revendications précédentes,
**caractérisé en ce que** la pièce principale (4) en carton ondulé (5A, 5B) comporte au moins une ligne de rainure (27) formée depuis au moins l'une des faces externes (4A, 4B) de ladite pièce principale (4) en carton ondulé (5A, 5B).

13. Elément de toit selon la revendication 12,
**caractérisé en ce que** ladite pièce principale (4) en carton ondulé (5A, 5B) comporte au moins une première et une seconde lignes de rainure (27), la première ligne de rainure (27) étant formée depuis une face externe (4A) supérieure de ladite pièce principale (4) et la seconde ligne de rainure (27) étant formée depuis une face externe (4B) inférieure de ladite pièce principale (4).

14. Elément de toit selon l'une quelconque des revendications précédentes,
**caractérisé en ce qu'**il comporte une pluralité de bandes d'adhésif (30) à double face adhérente, lesdites bandes d'adhésif (30) étant déposées sur une face externe supérieure (1A) dudit élément de toit (1).

15. Elément de toit selon la revendication 14,
**caractérisé en ce qu'**il comporte un film protecteur (31) amovible, recouvrant l'ensemble desdites bandes d'adhésif (30).
